# EUROPÄISCHE PATENTANMELDUNG

(11) **EP 1 912 005 A1**
(43) Veröffentlichungstag der Anmeldung: **16.04.2008**
(21) Anmeldenummer: 07018889.1
(22) Anmeldetag: 26.09.2007
(51) Int. Cl.: F16L 11/08

(54) **Schlauch, insbesondere Tauchermitteldruckschlauch**

(30) Priorität: 10.10.2006 DE 102006047850
(71) Anmelder: REHAU AG + Co, 95111 Rehau (DE)
(72) Erfinder: Schörner, Georg, 95111 Rehau (DE); Bayreuther, Thomas, 95111 Rehau (DE); Ruckdäschel, Gerhard, 95163 Weissenstadt (DE); Schaller, Yvonne, 95030 Hof (DE); Schuhknecht, Timo, 95111 Rehau (DE)

(57) **Zusammenfassung**

Die Erfindung betrifft einen Schlauch (1), insbesondere Tauchermitteldruckschlauch, zur Leitung von unter Druck stehenden Fluiden, insbesondere Luft. Der Schlauch (1) zeichnet sich dadurch aus, dass er aus einem Innenschlauch (3) aus Gummi, einer darauf aufgebrachten Armierungsschicht (4) und einer Polymerummantelung (2) aufgebaut ist.

## Beschreibung

Die Erfindung betrifft einen Schlauch, insbesondere Tauchermitteldruckschlauch, zur Leitung von unter Druck stehenden Fluiden.

Schläuche zum Leiten von unter Druck stehenden Fluiden sind bekannt. Sie werden für unterschiedliche Einsatzzwecke verwendet. Für die Anwendung zum Leiten von komprimierter Luft zwischen einem Druckminderer und einem Atemregler eines Tauchgeräts werden Schläuche mit unterschiedlichem Aufbau eingesetzt.

Eine bekannte Möglichkeit stellt ein einschichtiger Schlauch aus Gummi für einen derartigen Tauchermitteldruckschlauch dar. Dieser weist jedoch den Nachteil auf, dass beim Einsatz des Tauchgerätes in geringen Wassertiefen, eine Versprödung und Porosität des Gummimaterials durch die UV-Strahlung der Sonne eintritt. Auch hinterlässt der Gummischlauch auf glatten Oberflächen, wie z. B. Fliesen eines Schwimmbades, schwarze Abriebspuren, die unerwünscht sind.

Eine weitere bekannte Möglichkeit stellen Schläuche aus Polymermaterial mit Druckarmierung dar. Diese weisen die negativen Eigenschaften des Gummischlauchs nicht auf. Beim Einsatz derartiger Polymerschläuche hat sich gezeigt, dass diese, wenn sie nicht in ihrer gestreckten Länge transportiert werden, Deformationen aufweisen, die zu Einschränkungen bei der Benutzung als Tauchermitteldruckschlauch führen. Dies tritt vor allem bei höheren Lager-/Transporttemperaturen auf, die sich im Sommer auch in Kraftfahrzeugen nicht vermeiden lassen.

Der vorliegenden Erfindung liegt somit die Aufgabe zugrunde, einen Schlauch anzugeben, der die genannten Nachteile der im Stand der Technik bekannten Schläuche nicht aufweist.

Erfindungsgemäß wird diese Aufgabe durch einen Schlauch gemäß Anspruch 1 gelöst.

Dabei schützt die Polymerummantelung die Innenschicht des Schlauches aus Gummi vor der Versprödung und vermeidet vorteilhaft das Hinterlassen von Abriebspuren. Auch stellen sich bei den erfindungsgemäßen Schläuchen die Verformungen bei der Lagerung und dem Transport besser in die Ausgangsform zurück.

Es hat sich weiterhin als vorteilhaft für die Verwendung des Schlauchs als Tauchermitteldruckschlauch erwiesen, dass ein Schlauchabschnitt von ca. 80 cm Länge nach einer Durchwärmung bei einer Temperatur von mehr als 80 °C in einer Z-förmigen Zwangsfixierung, Abkühlen des Schlauchabschnitts auf Raumtemperatur in dieser Zwangsfixierung und Lösen des Schlauchabschnitts aus der Zwangsfixierung beim vertikalen Aufhängen des Schlauchabschnitts an einem Ende, eine vertikale Ausdehnung von mindestens 80 Prozent seiner gestreckten Länge aufweist. Durch diese Eigenschaft wird gewährleistet, dass der Atemregler noch bequem in einer für den Taucher günstigen Position anordenbar ist.

Um eine möglichst gute Rückstellung des Schlauchs nach der unter Temperatureinwirkung eingebrachten Verformung zu erreichen, hat es sich als vorteilhaft erwiesen, wenn der Innenschlauch aus Butylkautschuk (IIR) oder Ethylen-Propylen-Dien-Kautschuk (EPDM) oder Styrol-Butadien-Kautschuk (SBR) besteht. In diesem Erfindungszusammenhang wurde auch erkannt, dass auch andere Gummimischungen verwendet werden können, wenn keine Beeinträchtigung der durch den Schlauch strömenden Luft durch diese Mischungen zu erwarten ist.

Die durch den Schlauch strömende Luft hat einen Arbeitsdruck im Bereich von 0,6 MPa bis 1,0 MPa. Um diesem Druck standzuhalten, hat es sich als günstig erwiesen synthetische Polymerfasern als Armierungsschicht zu verwenden. Dabei können die Polymerfasern vorteilhaft aus der Gruppe Polyester, Polyamid, Aramid, Polyacrylnitril, Polytetrafluorethylen, Polyethylen, Polypropylen, Polyvinylchlorid oder Polyurethan ausgewählt werden.

Eine geschlossene Armierungsschicht hat sich als besonders vorteilhaft erwiesen. Dabei können die synthetischen Polymerfasern um den Innenschlauch aus Gummi gewickelt oder geflochten sein. Um die Armierungsschicht auf dem Innenschlauch aus Gummi zu fixieren, wird ein Kleber auf dem Innenschlauch vor dem Umwickeln oder Umflechten mit der Armierungsschicht aufgebracht.

Als mechanischer Abriebschutz für die Armierungsschicht und als UV-Schutz für den Innenschlauch aus Gummi kann als Polymerummantelung ein thermoplastisch verarbeitbares Polymer aus der Gruppe Polyvinylchlorid (PVC), Nitril-Butadien-Kautschuk (NBRT), PVC-Nitril-Blend oder Polyurethan (PUR) vorteilhaft verwendet werden.

Die Erfindung soll nun an die Erfindung nicht einschränkenden Ausführungsbeispielen näher beschrieben werden. Es zeigt:
- Figur 1 -: Querschnitt eines erfindungsgemäßen Schlauchs
- Figur 2 -: Schlauch mit Zwangsfixierung
- Figur 3 -: Schlauch nach dem Lösen der Zwangsfixierung

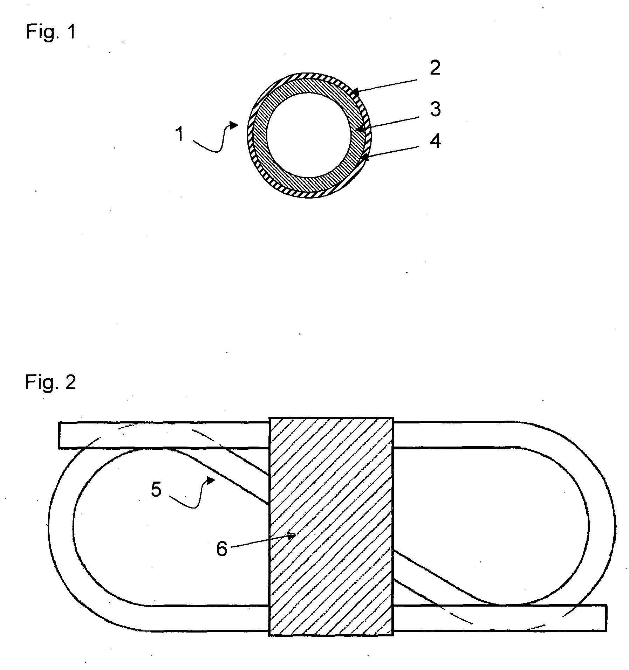

In Figur 1 ist ein erfindungsgemäßer Schlauch (1)(nicht maßstäblich) im Querschnitt dargestellt. Der Schlauch (1) weist einen dreischichtigen Aufbau auf, wobei der Innenschlauch (3) aus einem Gummi gefertigt ist. Diese Gummimischung des Innenschlauchs (3) hat vorzugsweise eine Härte von 80 ± 5 Shore A. Damit wird eine ausreichende Festigkeit des Innenschlauchs (3) erreicht. Für die Verwendung als Tauchermitteldruckschlauch weist der Innenschlauch (3) eine Wandstärke im Bereich von 1,0 mm bis 3,0 mm auf.
Auf dem Innenschlauch (3) ist eine geschlossene Geflechtsarmierung (4) aus Polyesterfäden angeordnet, die mit Hilfe eines Klebers auf dem Innenschlauch (3) fixiert ist. Diese Armierungsschicht (4) ermöglicht einen Berstdruck des Schlauchs (1) von mehr als 20 MPa. Als Ummantelung (2) ist eine Schicht aus PVC-Nitril-Blend auf die Armierungsschicht (4) aufgebracht. Die Verbindung zwischen der Ummantelung (2) und der Armierungsschicht (4) wird ebenfalls durch einen Kleber sichergestellt. Durch die Polymerummantelung (2) wird die Armierungsschicht (4) vor mechanischem Abrieb und sonstigen Umwelteinflüssen geschützt. Auch dient die Ummantelung (2) als UV-Schutz für den Innenschlauch (3) aus Gummi.

An die Enden des Schlauchs (1) können bekannte Anschlussarmaturen angebracht werden, die eine Adaptierung an den Druckminderer einerseits und den Atemregler andererseits ermöglichen.

Bei dem ordnungsgemäßen Gebrauch der erfindungsgemäßen Schläuche (1) ist es erforderlich, dass keine Zugbelastung am Atemregler, der am Mundstück angebracht ist, durch den Schlauch (1) angreift, um das Risiko zu minimieren, dass der Atemregler mit dem Mundstück vom Taucher unter Wasser verloren wird und somit kein Atmen für den Taucher mehr möglich ist.

Bei einem ungünstigen Transport oder einer ungünstigen Lagerung des Schlauchs (1) oder des Tauchgeräts bei höheren Temperaturen kann es bei der Entnahme zu bleibenden Verformungen der Polymerschläuche kommen. Durch diese Verformungen würde sich der Schlauch (1) verkürzen, wodurch es zu einer eingeschränkten Nutzungsmöglichkeit des Schlauchs (1) kommt.

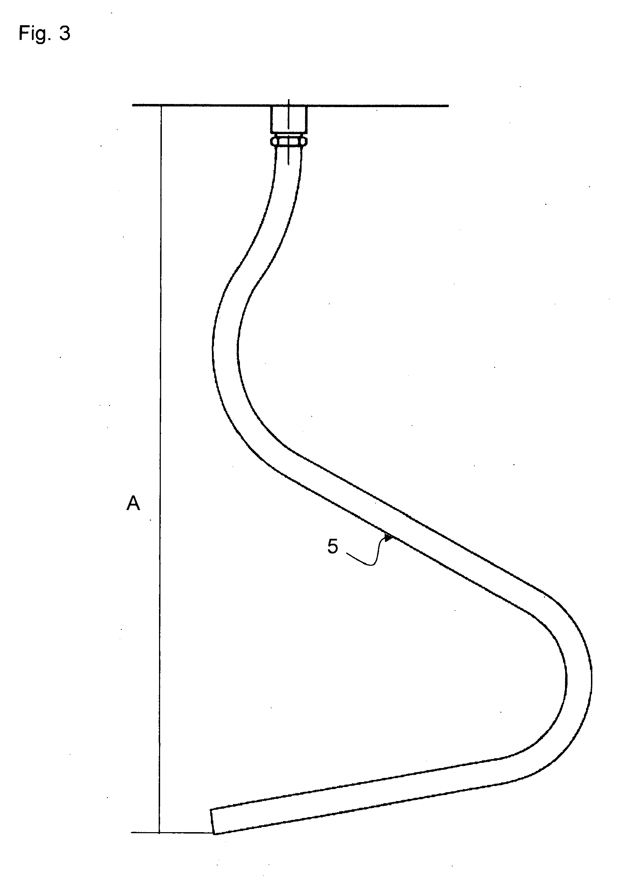

Um zu überprüfen, ob sich ein Schlauch (1) nach einer derartigen Lagerung oder einem derartigen Transport wieder ausreichend zurückstellt, wird ein Schlauchabschnitt (5) mit einer Länge von ca. 80 cm Z-förmig zusammengelegt und mit einer Zwangsfixierung (6) gemäß Figur 2 versehen. Die Zwangsfixierung kann dabei z. B. durch einen Ring (6) mit einem Durchmesser von ca. 90 mm gebildet werden. Es sind aber auch andere Mittel (6) möglich, die eine derartige Verformung des Schlauchabschnittes (5) hervorrufen.
Der so präparierte Schlauchabschnitt (5) wird bei einer Temperatur von mehr als 80 °C durchgewärmt und anschließend auf Raumtemperatur abgekühlt. Nach der vollständigen Abkühlung wird die Zwangsfixierung (6) entfernt und der Schlauchabschnitt (5) an einem Ende, wie in Figur 3 dargestellt, befestigt.

Die im Schlauchabschnitt (5) durch die Zwangsfixierung (6) eingebrachten Verformungen verkürzen die vertikale Ausdehnung (A) des Schlauchabschnittes (5) beim vertikalen Aufhängen an einem Ende des Schlauchabschnittes (5). Um keine oder nur sehr geringe Zugkräfte auf den Atemregler durch den Schlauch (1) auszuüben, wurde vorteilhaft erkannt, dass die vertikale Ausdehnung (A) des Schlauchabschnittes (5) 80 Prozent der Ausgangslänge von ca. 80 cm nicht unterschreiten soll.

## Patentansprüche

1. Schlauch (1), insbesondere Tauchermitteldruckschlauch, zur Leitung von unter Druck stehenden Fluiden, insbesondere Luft, **dadurch gekennzeichnet, dass** der Schlauch (1) aus einem Innenschlauch (3) aus Gummi, einer darauf aufgebrachten Armierungsschicht (4) und einer Polymerummantelung (2) aufgebaut ist.

2. Schlauch (1) nach Anspruch 1, **dadurch gekennzeichnet, dass** ein Schlauchabschnitt (5) von ca. 80 cm Länge des Schlauchs nach
- einer Durchwärmung bei einer Temperatur von mehr als 80 °C in einer Z-förmigen Zwangsfixierung
- Abkühlen des Schlauchabschnitts auf Raumtemperatur in dieser Zwangsfixierung (6) und
- Lösen des Schlauchabschnitts (5) aus der Zwangsfixierung (6)
beim vertikalen Aufhängen des Schlauchabschnitts (5) an einem Ende, eine vertikale Ausdehnung von mindestens 80 Prozent seiner gestreckten Länge aufweist.

3. Schlauch (1) nach Anspruch 1 oder 2, **dadurch gekennzeichnet, dass** der Innenschlauch (3) aus Butylkautschuk (IIR) oder Ethylen-Propylen-Dien-Kautschuk (EPDM) oder Styrol-Butadien-Kautschuk (SBR) besteht.

4. Schlauch (1) nach einem der vorhergehenden Ansprüche, **dadurch gekennzeichnet, dass** die Armierungsschicht (4) aus synthetischen Polymerfasern aufgebaut ist.

5. Schlauch (1) nach Anspruch 4, **dadurch gekennzeichnet, dass** die synthetischen Polymerfasern aus Polymeren der Gruppe Polyester, Polyamid, Aramid, Polyacrylnitril, Polytetrafluorethylen, Polyethylen, Polypropylen, Polyvinylchlorid oder Polyurethan ausgewählt sind.

6. Schlauch (1) nach zumindest einem der vorhergehenden Ansprüchen, **dadurch gekennzeichnet, dass** die Armierungsschicht (4) geschlossen ist.

7. Schlauch (1) nach zumindest einem der vorhergehenden Ansprüche, **dadurch gekennzeichnet, dass** die Polymerummantelung (2) aus einem thermoplastisch verarbeitbaren Polymer besteht.

8. Schlauch (1) nach Anspruch 7, **dadurch gekennzeichnet, dass** das thermoplastisch verarbeitbare Polymer der Polymerummantelung (2) aus der Gruppe Polyvinylchlorid (PVC), Nitril-Butadien-Kautschuk (NBRT), PVC-Nitril-Blend oder Polyurethan (PUR) ausgewählt ist.
